(19) Europäisches Patentamt
European Patent Office
Office européen des brevets

(11) Publication number: **0 361 567 A2**

(12) # EUROPEAN PATENT APPLICATION

(21) Application number: **89202202.1**

(22) Date of filing: **03.07.89**

(51) Int. Cl.5: **C08L 71/00 , C08L 81/02 , //(C08L71/00,81:02), (C08L81/02,71:00)**

(30) Priority: **05.07.88 GB 8815992**

(43) Date of publication of application: **04.04.90 Bulletin 90/14**

(84) Designated Contracting States: **ES**

(71) Applicant: **T&N TECHNOLOGY LIMITED**
**Cawston House Cawston**
**Rugby Warwickshire, CV22 7SB(GB)**

(72) Inventor: **Glyndwr, John Davies 2 Cox Crescent**
**Dunchurch Rugby**
**Warwickshire(GB)**

(74) Representative: **Hadfield, Robert Franklin et al**
**T&N plc Group Patent Department Bowdon House Ashburton Road West Trafford Park**
**Manchester M17 1RA(GB)**

(54) **Polymer composition.**

(57) A polymer composition having a polymer matrix which comprises a polyarylene sulphide and a polycyanoaryl ether in the ratio by volume in the range 95:5 to 5:95, and containing reinforcing fibres and/or friction and wear modifiers in a total amount in the range 15 to 40 per cent by volume of the composition.

EP 0 361 567 A2

Xerox Copy Centre

## Polymer composition

This invention relates to a polymer composition and more particularly to a novel composition including a polyarylene sulphide.

Polarylene sulphides, particularly polyphenylene sulphide, are useful in bearing applications because these polymers have a good affinity for lubricants so that under marginal conditions lubricants are retained on the surface. However, these polymers are not strong enough for some applications.

Accordingly the present invention provides a polymer composition which comprises,

a) a thermoplastic polymer matrix of polyarylene sulphide and polycyanoaryl ether, the ratio of the two polymers by volume being in the range 95:5 to 5:95

b) reinforcing fibre in an amount of 0 to 30 per cent by volume of the total composition

c) friction and wear modifiers in an amount of 0 to 30 per cent by volume of the total composition the total amount of b) plus c) in the composition being in the range 15 to 40 per cent by volume.

The polyarylene sulphide polymer is a thermoplastic polymer containing aryl groups linked by -5- linkages, the preferred polymer being polyphenylene sulphide of which the general forumula is

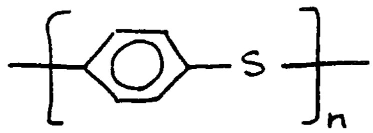

The polycyanoaryl ether is composed of aryl groups linked by ether linkages, at least a proportion of the aryl groups carrying a -CN group attached directly to the aromatic ring. An example of a polycyanoaryl ether is a polymer which has units of the formula

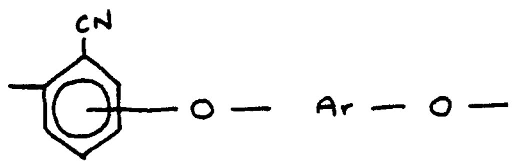

where - Ar- may be 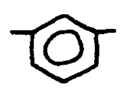 , 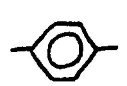 , 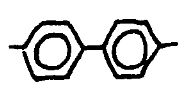 and 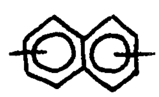

Such polymers are described in more detail in European Patent Applications Nos 0187638,0193003 and 0243000 of Idemitsu Kosan Company Limited.

A particular example of a polycyanoaryl ether is a polyether nitrile of general formula

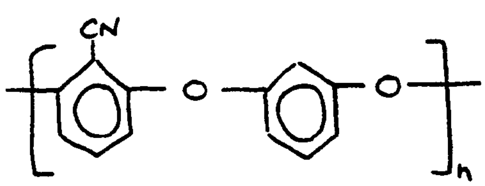

Preferably the ratio by volume of the polyarylene sulphide to the polycyanoaryl ether is in the range 50:50 to 5:95. The polycyanoaryl ether is a thermoplastic polymer of high strength and temperature resistance, and provides extra strength to the polymer composition without serious detriment to the lubricant retention properties of the polyarylene sulphide.

The reinforcing fibres are short lengths of fibre and may be inorganic fibres such as glass, or carbon fibres, or temperature resistant organic fibres such as aramid fibres. The preferred reinforcing fibre is carbon fibre and the preferred fibre length is in the range 0.5mm to 10mm.

Friction and wear modifiers may be included to control the frictional properties of the material. Examples of such materials are graphite, powdered bronze, polytetrafluoroethylene (PTFE) powder, alumina, antimony oxide, barium sulphate, boron nitride, cadmium sulphide calcium fluoride, fine ceramic powder, clay, chromic oxide, powdered coke, copper phosphate, metal flake, metal powders, mica, molybdenum disulphide, phthalocyanines, polyoxybenzoate, silicon carbide, silicone, talc, wollastonite, zinc sulphide.

A preferred friction and wear modifier is oil filled exfoliated graphite as described in our co-pending UK Patent Application No 8812511. This consists of dry exfoliated graphite containing 0.25 to 10 times its own weight of the lubricant.

The compositions of the invention may be prepared by conventional compounding techniques and are suitable for use in injection moulding or extrusion. They may be used, for example, in the manufacture of injection moulded bushes and thrust washers, or may be extruded as a ribbon which can then be laminated with a metal backing to produce a plastic lined metal bearing shell.

An example of a composition suitable for the manufacture of a bush by injection moulding is as follows, all parts being parts by volume,

| | |
|---|---|
| Polyphenylene Sulphide | 20 parts |
| Polyether nitrile ID300* (Idemitsu Kosan Co Ltd) | 40 parts |
| Carbon Fibre (2mm) | 15 parts |
| Polytetrafluoroethylene (powder) | 15 parts |
| Powdered Bronze (<300 mesh) | 10 parts |

The composition is compounded in a conventional compounding extruder using a barrel temperature of 360°C, and may then be used for injection moulding of bushes, at a barrel temperature of 350°C to 370°C.

* Polyether nitrile ID300 is a polycyanoaryl ether of general formula

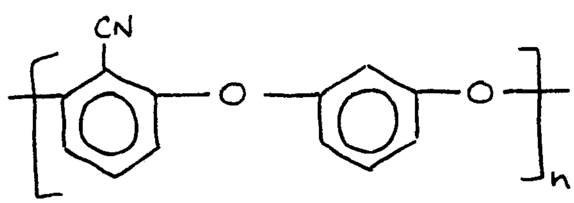

having a melting point of 340°C.

## Claims

1. A polymer composition which comprises
a) a thermoplastic polymer matrix of polyarylene sulphide and a second thermoplastic polymer,
b) reinforcing fibre in an amount of 0 to 30 per cent by volume of the total composition and
c) friction and wear modifiers in an amount of 0 to 30 per cent by volume of the total composition
characterised in that the second thermoplastic polymer in the matrix is a polycyanoaryl ether, the ratio of the two polymers in the matrix by volume being in the range 95:5 to 5:95 and the total amount of b) plus c) in the composition is in the range 15 to 40 per cent by volume.

2. A polymer composition according to claim 1 wherein the polyarylene sulphide is polyphenylene

sulphide.

3. A polymer composition according to claim 1 or 2 wherein the polycyanoaryl ether is a polymer which has units of the formula

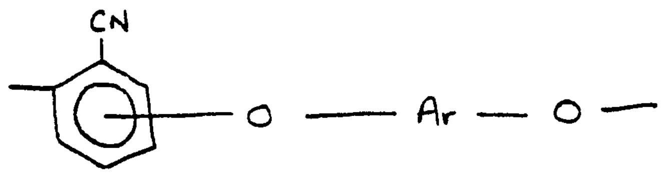

where - Ar- may be 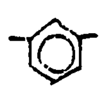 , 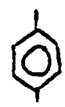 , 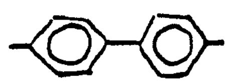 and 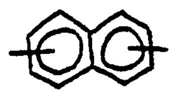

4. A polymer composition according to claim 3 wherein the polycyanoaryl ether is a polyether nitrile of general formula

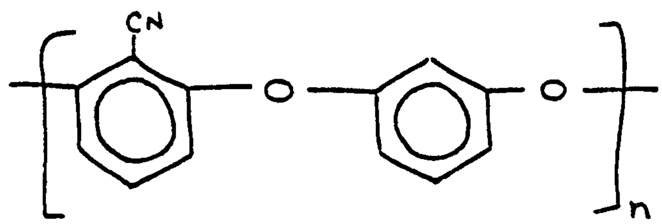

5. A polymer composition according to any one of claims 1 to 4 wherein the ratio by volume of polyarylene sulphide to the polycyanoaryl ether is in the range 50:50 to 5:95

6. A polymer composition according to any one of the preceding claims wherein the reinforcing fibre is carbon fibre.